# EUROPEAN PATENT APPLICATION

(11) **EP 4 290 987 A1**
(43) Date of publication of application: **13.12.2023**
(21) Application number: 21927668.0
(22) Date of filing: 09.12.2021
(51) Int. Cl.: H05K 5/02, H04M 1/02, G02F 1/1334

(54) **COLOR-CHANGING FILM, HOUSING ASSEMBLY, AND ELECTRONIC DEVICE**

(30) Priority: 24.02.2021 CN 202110207804; 24.02.2021 CN 202120411544 U
(71) Applicant: GUANGDONG OPPO MOBILE TELECOMMUNICATIONS CORP., LTD., Dongguan, Guangdong 523860 (CN)
(72) Inventor: LIAO, Yi-Hsiang, Dongguan, Guangdong 523860 (CN); WU, Zhongzheng, Dongguan, Guangdong 523860 (CN)
(74) Representative: Novagraaf Technologies
(86) International application number: PCT/CN2021/136838
(87) International publication number: WO 2022/179244

(57) **Abstract**

A color-changing film is provided in the present disclosure. The color-changing film includes a first decorative layer and at least one dimming structure disposed on a surface of the first decorative layer; the first decorative layer is colored; each of the dimming structure includes a dimming film and a second decorative layer; the dimming film is disposed between the second decorative layer and the first decorative layer; and the second decorative layer is a light-transmitting layer. By disposing the dimming structure in the color-changing film provided by this disclosure, the color of the color-changing film can be changed, so as to achieve color change and enrich the appearance of the color-changing film; meanwhile, the color of the color-changing film can be selected in a wide range, which can realize various color appearance. A housing assembly and an electronic device including the color-changing film are also provided in the present disclosure.

## Description

### TECHNICAL FIELD

Embodiments of the present disclosure relate to electronic devices, and more particularly, to a color-changing film, a housing assembly, and an electronic device.

### BACKGROUND

With the continuous development of electronic device, users have higher and higher requirements on the appearance of electronic device, and the appearance of a single color can no longer meet the needs of users. Therefore, the appearance effects of more and more electronic devices are developing toward diversification.

### SUMMARY

In view of this, the present disclosure provides a color-changing film capable of changing colors, which has strong appearance and rich visual effects, which is beneficial for application in electronic device and improves the product competitiveness of electronic device.

In a first aspect, a color-changing film is disclosed in the present disclosure. The color-changing film may include a first decorative layer and at least one dimming structure disposed on a surface of the first decorative layer. The first decorative layer may be colored. Each of the at least one dimming structure may include a dimming film and a second decorative layer. The dimming film may be disposed between the second decorative layer and the first decorative layer. The second decorative layer may be a light-transmitting layer.

In the second aspect, a housing assembly is disclosed in the present disclosure. The housing assembly may include a housing body and a color-changing film disposed on a surface of the housing body. The color-changing film may include a first decorative layer and at least one dimming structure disposed on a surface of the first decorative layer. The first decorative layer may be colored. Each of the at least one dimming structure may include a dimming film and a second decorative layer. The dimming film may be disposed between the second decorative layer and the first decorative layer. The second decorative layer may be a light-transmitting layer.

In the third aspect, an electronic device is disclosed in the present disclosure. The electronic device may include a housing assembly and a control circuit. The housing assembly may include a housing body and a color-changing film disposed on the housing body. The color-changing film may include a first decorative layer and at least one dimming structure disposed on a surface of the first decorative layer. The first decorative layer may be colored. Each of the at least one dimming structure may include a dimming film and a second decorative layer. The dimming film may be disposed between the second decorative layer and the first decorative layer. The second decorative layer may be a light-transmitting layer. The control circuit and the dimming film may be electrically connected.

### BRIEF DESCRIPTION OF DRAWINGS

In order to more clearly illustrate the embodiments of the present disclosure, the figures in the embodiments of the present disclosure will be described below.
FIG. 1 is a schematic structural diagram of a color-changing film, according to an embodiment of the present disclosure.
FIG. 2 is a schematic structural diagram of a dimming film, according to an embodiment of the present disclosure.
FIG. 3 is a schematic structural diagram of a dimming film, according to another embodiment of the present disclosure.
FIG. 4 is a schematic structural diagram of a dimming film, according to another embodiment of the present disclosure.
FIG. 5 is a schematic structural diagram of a color-changing film, according to another embodiment of the present disclosure.
FIG. 6 is a schematic structural diagram of a color-changing film, according to another embodiment of the present disclosure.
FIG. 7 is a schematic structural diagram of a color-changing film, according to another embodiment of the present disclosure.
FIG. 8 is a schematic structural diagram of a color-changing film, according to another embodiment of the present disclosure.
FIG. 9 is a schematic structural diagram of a color-changing film, according to another embodiment of the present disclosure.
FIG. 10 is a schematic structural diagram of a color-changing film, according to another embodiment of the present disclosure.
FIG. 11 is a schematic structural diagram of a housing assembly, according to an embodiment of the present disclosure.
FIG. 12 is a schematic structural diagram of an electronic device, according to an embodiment of the present disclosure.
FIG. 13 is a schematic diagram of the connection between the dimming film and the flexible circuit board, according to an embodiment of the present disclosure.

first decorative layer -10, dimming structure -20, dimming film -21, second decorative layer -22, first transparent conductive layer -211, second transparent conductive layer - 212, polymer dispersed liquid crystal layer -213, polymer network liquid crystal layer -214, first metal line -215, second metal line -216, first color layer -11, first optical film layer -12, first texture layer -13, non-conductive metal layer -14, second color layer -221, second optical film layer -222, second texture layer -223, first connection layer -30, second connection layer -40, color-changing film -100, housing body -200, housing assembly -300, flexible circuit board -400.

### DETAILED DESCRIPTION

The following are the preferred embodiments of the present disclosure. It should be noted that for those skilled in the art, without departing from the principles of the present disclosure, some improvements and modifications can be made, and these improvements and modifications are also considered as the scope of the present disclosure.

The following disclosures provide many different implementations or examples for realizing different structures of the present disclosure. In order to simplify the present disclosure, the specific examples of components and arrangements are described below. Of course, they are only examples, and the purpose is not to limit the present disclosure. Furthermore, the present disclosure may repeat reference numerals and/or reference letters in different embodiments, such repetition is for the purpose of simplicity and clarity, and is not indicative of a relationship between the various embodiments and/or arrangements. In addition, this disclosure provides examples of various specific processes and materials, but those skill in the art may recognize the application of other processes and/or the use of other materials.

Embodiments of the present disclosure provide a color-changing film. The color-changing film may include a first decorative layer and at least one dimming structure disposed on a surface of the first decorative layer. The first decorative layer may be colored. Each of the at least one dimming structure may include a dimming film and a second decorative layer. The dimming film may be disposed between the second decorative layer and the first decorative layer. The second decorative layer may be a light-transmitting layer.

For example, there may be a color difference between the first decorative layer and the second decorative layer.

For example, the color-changing film may include the first decorative layer, the dimming film, and the second decorative layer, which may be cascaded.

For example, the color-changing film may be provided with a plurality of dimming structures. The plurality of dimming structures may be cascaded or disposed in a same layer.

For example, there may be a color difference between the second decorative layers in the plurality of dimming structures.

For example, the color-changing film may show a first color when power on, and may show a second color when power off. One of the first color and the second color may be the color of the dimming structure. The other one of the first color and the second color may be the superimposed color of the dimming structure and the first decorative layer.

For example, the Lab value of the first color may be (L1, a1, b1). The Lab value of the second color may be (L2, a2, b2); L2>L1. The absolute value of the difference between a1 and a2 may be greater than 10, or the absolute value of the difference between b1 and b2 may be greater than 10.

For example, the dimming film may be a polymer dispersed liquid crystal film. The polymer dispersed liquid crystal film ay include a first transparent conductive layer, a polymer dispersed liquid crystal layer, and a second transparent conductive layer, which may be cascaded.

For example, the dimming film may be a polymer network liquid crystal film. The polymer network liquid crystal film may include a first transparent conductive layer, a polymer network liquid crystal layer, and a second transparent conductive layer, which may be cascaded.

For example, pigment molecules may be dispersed in the dimming film.

For example, the dimming film may be a forward dimming film or a reverse dimming film.

For example, a light transmittance of the dimming film may be greater than or equal to 80%. An absolute value of the haze difference of the dimming film between power-on and power-off may be greater than or equal to 70%.

For example, the first decorative layer may include at least one of a first color layer, at least one of a first optical film layer, at least one of a first texture layer, at least one of a non-conductive metal layer, or a combination thereof. The second decorative layer may include at least one of a second color layer, at least one of a second optical film layer, at least one of a second texture layer, or a combination thereof.

For example, an orthographic projection of the second decorative layer on the first decorative layer may completely or partially cover the first decorative layer.

For example, the color-changing film may include a first connection layer. The first connection layer may be disposed between the first decorative layer and the dimming structure to connect the first decorative layer and the dimming structure. The color-changing film may include a second connection layer. The second connection layer may be disposed between the dimming film and the second decorative layer to connect the dimming film and the second decorative layer.

Embodiments of the present disclosure provide a housing assembly. The housing assembly may include a housing body and a color-changing film disposed on a surface of the housing body. The color-changing film may include a first decorative layer and at least one dimming structure disposed on a surface of the first decorative layer. The first decorative layer may be colored. Each of the at least one dimming structure may include a dimming film and a second decorative layer. The dimming film may be disposed between the second decorative layer and the first decorative layer. The second decorative layer may be a light-transmitting layer.

For example, the color-changing film may be disposed on an outer surface of the housing body, and the first decorative layer may be disposed between the housing body and the second decorative layer. The housing body may be a transparent shell, the color-changing film may be disposed on an inner surface of the transparent shell, and the second decorative layer may be disposed between the transparent shell and the first decorative layer.

Embodiments of the present disclosure provide an electronic device. The electronic device may include a housing assembly and a control circuit. The housing assembly may include a housing body and a color-changing film disposed on the housing body. The color-changing film may include a first decorative layer and at least one dimming structure disposed on a surface of the first decorative layer. The first decorative layer may be colored. Each of the dimming structure may include a dimming film and a second decorative layer. The dimming film may be disposed between the second decorative layer and the first decorative layer. The second decorative layer may be a light-transmitting layer. The control circuit and the dimming film may be electrically connected.

For example, the electronic device may include a processor connected to the control circuit and a signal input apparatus connected to the processor. The signal input apparatus may be configured to input a signal command to the processor. The processor may be configured to input a control command to the control circuit according to the signal command. The control circuit may be configured to receive the control command and control the color-changing film to change color.

For example, the signal input apparatus may include at least one of a touch screen, at least one of a physical button, at least one of a sensor, at least one of a communication module, or a combination thereof.

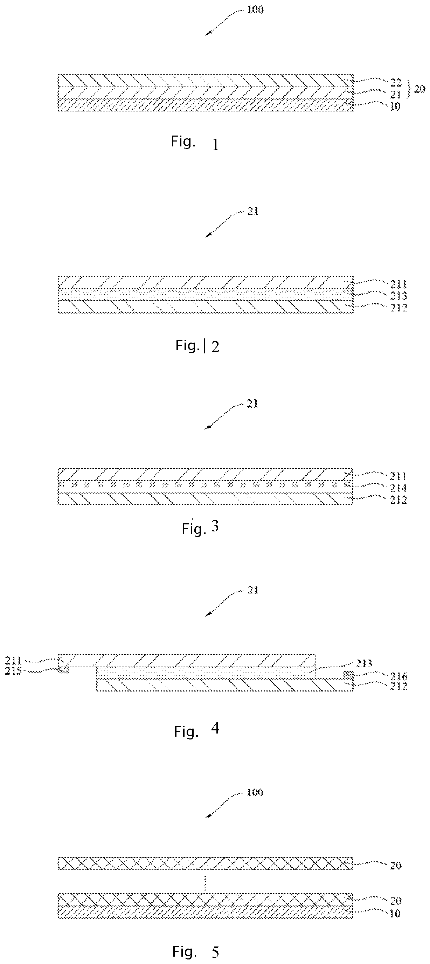

FIG. 1 is a schematic structural diagram of a color-changing film, according to an embodiment of the present disclosure. The color-changing film 100 includes a first decorative layer 10 and at least one dimming structure 20 disposed on a surface of the first decorative layer 10; the first decorative layer 10 is colored. Each dimming structure 20 includes a dimming film 21 and a second decorative layer 22. The dimming film 21 is disposed between the second decorative layer 22 and the first decorative layer 10. The second decorative layer 22 is a light-transmitting layer.

In the present disclosure, the color-changing film 100 may include the first decorative layer 10 and the dimming structure 20. By controlling the dimming film 21 in the dimming structure 20, the color-changing film 100 may have the color effect of the first decorative layer 10, or have the color effect of superimposing the first decorative layer 10 and the dimming structure 20, thereby realizing color change. Meanwhile, the optional colors of the first decorative layer 10 and the second decorative layer 22 are not limited, so that the colors of the color-changing film 100 are diversified, and various colors can be realized. In the related art, only a decorative layer of a single color is used, so that a color change cannot be realized. If the electrochromic material is used to realize the color change, since the color change of the electrochromic material is fixed, the color change effect may be fixed, and various color changes cannot be realized. In this disclosure, the colors of the first decorative layer 10 and the second decorative layer 22 can be selected according to implementation, so that the color-changing film 100 can have different color appearances. The color-changing film 100 may realize at least two colors. There are many optional colors in the present disclosure, and the visual effect is rich, which greatly improves the appearance expressiveness of the color-changing film 100.

In the present disclosure, the color-changing film 100 may include at least one dimming structure 20. Each dimming structure 20 may include the dimming film 21 and the second decorative layer 22. The dimming film 21 may be disposed between the second decorative layer 22 and the first decorative layer 10. The second decorative layer 22 may be a light-transmitting layer. That is, the dimming film 21 in the dimming structure A may be disposed between the first decorative layer 10 and the second decorative layer 22 in the dimming structure A. The dimming structure A may be any one of the at least one dimming structure 20.

In the present disclosure, the dimming film 21 may be in two states of clear and opaque when the power is turned on and off, so as to cooperate with the first decorative layer 10 and the second decorative layer 22 to realize the color change of the color-changing film 100.

In some embodiments of the present disclosure, dimming film 21 may be a forward dimming film or a reverse dimming film. The forward dimming film may be clear when power is on, and opaque when power is off. The reverse dimming film may be opaque when power is on, and clear when power is off. It can be understood that the types of the dimming films 21 in the dimming structures 20 can be the same or different, so that the different appearances can be realized by turning on and off the power.

In an embodiment of the present disclosure, the dimming film 21 may be a polymer dispersed liquid crystal (PDLC) film. The PDLC film may be formed by a polymer uniformly dispersed with liquid crystal droplets. When the liquid crystal droplets are freely oriented, the refractive index of the light entering the liquid crystal droplets is quite different from that of the polymer, and the light is strongly scattered. This makes PDLC film appear opaque, even milky white. When the orientation of the liquid crystal droplet is controlled so that the refractive index of the light entering the liquid crystal droplet is approximately the same as that of the polymer, the light may not reflect in the film but directly transmit, and the PDLC film appears clear. In an embodiment, the PDLC film may be a forward dimming film. That is to say, by applying an electric field, the orientation of the liquid crystal droplets is controlled to make the PDLC film clear. FIG. 2 is a schematic structural diagram of a dimming film, according to an embodiment of the present disclosure. The dimming film 21 may be a PDLC film, and the PDLC film may include a first transparent conductive layer 211, a polymer dispersed liquid crystal layer 213, and a second transparent conductive layer 212, which may be cascaded. The PDLC film can be connected to an external circuit through the first transparent conductive layer 211 and the second transparent conductive layer 212. A voltage may be applied to the polymer dispersed liquid crystal layer 213 through the first transparent conductive layer 211 and the second transparent conductive layer 212 to realize clear of the PDLC film.

In an embodiment of the present disclosure, the dimming film 21 may be a polymer network liquid crystal (PNLC) film. Compared with the PDLC film, the liquid crystal in the PNLC film does not form spherical or spherical microdroplets. Instead, it is distributed in the three-dimensional polymer network to form a continuous channel network. In an embodiment, the PNLC film is a reverse dimming film. That is to say, when no electric field is applied, the PNLC film is clear, and after the electric field is applied, the PNLC film is opaque. FIG. 3 is a schematic structural diagram of a dimming film, according to another embodiment of the present disclosure. The dimming film 21 is a PNLC film, and the PNLC film includes a first transparent conductive layer 211, a polymer network liquid crystal layer 214, and a second transparent conductive layer 212, which may be cascaded. The PNLC film can be connected to an external circuit through the first transparent conductive layer 211 and the second transparent conductive layer 212. A voltage may be applied to the polymer network liquid crystal layer 214 through the first transparent conductive layer 211 and the second transparent conductive layer 212 to realize opaque of the PNLC film.

In the present disclosure, the thickness of polymer dispersed liquid crystal layer 213 and polymer network liquid crystal layer 214 can be selected based on implementation. In an embodiment of the present disclosure, the thickness of polymer dispersed liquid crystal layer 213 and the thickness of the polymer network liquid crystal layer 214 can be, but is not limited to, 10µm-100µm. For instance, the thickness of polymer dispersed liquid crystal layer 213 and the thickness of polymer network liquid crystal layer 214 can be, but is not limited to, 10µm, 15µm, 20µm, 35µm, 50µm, 60µm, 70µm, 85µm, 90µm, or 100µm.

In an embodiment of the present disclosure, the first transparent conductive layer 211 may include a first substrate layer and a first conductive layer. The first conductive layer may be disposed between the first substrate layer and the second transparent conductive layer 212. In another embodiment of the present disclosure, the second transparent conductive layer 212 may include a second substrate layer and a second conductive layer, and the second conductive layer may be disposed between the second substrate layer and the first transparent conductive layer 211.

In some embodiments of the present disclosure, the first substrate layer and the second substrate layer may be a plastic layer. By disposing the plastic layer, the flexibility of the first transparent conductive layer 211 and the second transparent conductive layer 212 may be improved. Further, the material of the plastic layer may include at least one of, e.g., polyethylene glycol terephthalate, polystyrene, polycarbonate, polymethyl methacrylate, or a combination thereof. Specifically, the first substrate layer and the second substrate layer may be, but are not limited to, a polyethylene glycol terephthalate layer. In an embodiment, the thickness of the first substrate layer and the thickness of the second substrate layer may each be, but are not limited to, 50µm-300µm. The thickness of the first substrate layer and the thickness of the second substrate layer may be the same or different. The thickness of the first substrate layer and the thickness of the second substrate layer may be within the above thickness range, which not only ensures beneficial mechanical properties, light transmission, and bending properties, but also may ensure the dimming film 21 is not undesirably thick. This may be in line with the development trend of light and thin films. Specifically, the thickness of the first substrate layer and the thickness of the second substrate layer may be, but is/are not limited to, 50µm, 70µm, 85µm, 100µm, 125µm, 150µm, 185µm, 200µm, 220µm, 250µm or 280µm, etc.

In some embodiments of the present disclosure, the materials of the first conductive layer and the second conductive layer may be respectively selected from at least one of indium tin oxide, indium zinc oxide, fluorine-doped tin oxide, aluminum-doped zinc oxide, or any combination thereof. The material of the first conductive layer and the material of the second conductive layer may be the same or different. The above-mentioned materials may not used to form the first conductive layer and the second conductive layer, which not only have good conductivity, so that the state of the dimming film 21 changes rapidly, but also make the conductive layer have beneficial light-transmission performance, and ensure the color changing effect. In an embodiment, the thickness of the first conductive layer and the thickness of the second conductive layer may each be, but is not limited to, 50nm-200nm. The first conductive layer and the second conductive layer with this thickness have good performance. Specifically, the thickness of the first conductive layer and the thickness of the second conductive layer may be, but is/are not limited to, 60nm, 75nm, 90nm, 100nm, 120nm, 130nm, 150nm, 160nm, 180nm, 190nm, or 200nm etc.

In the present disclosure, the first conductive layer and the second conductive layer may be formed by, but is not limited to, deposition, coating, etc., such as vacuum evaporation, sputtering, and spin coating. The polymer dispersed liquid crystal layer 213 and the polymer network liquid crystal layer 214 may be formed by coating, but is not limited thereto. In an embodiment, a conductive material may be coated on the plastic layer; and after drying, the first transparent conductive layer 211 and the second transparent conductive layer 212 are obtained. After coating the polymer dispersed liquid crystal or polymer network liquid crystal on the surface of the first transparent conductive layer 211 and covering the second transparent conductive layer 212, the dimming film 21 may be obtained after drying.

FIG. 4 is a schematic structural diagram of a dimming film, according to another embodiment of the present disclosure. Taking PDLC film as an example, the orthographic projection of the polymer dispersed liquid crystal layer 213 on the first transparent conductive layer 211 completely falls into the surface of the first transparent conductive layer 211 and covers part of the first transparent conductive layer 211. The orthographic projection of the polymer dispersed liquid crystal layer 213 on the second transparent conductive layer 212 completely falls into the surface of the second transparent conductive layer 212 and covers part of the second transparent conductive layer 212. The dimming film 21 may also include a first metal line 215 and/or a second metal line 216, the first metal line 215 may be disposed on the first transparent conductive layer 211, and the second metal line 216 may be disposed on the second transparent conductive layer 212. In an embodiment, the first metal line 215 may extend along the edge of the first transparent conductive layer 211 and be electrically connected to the first transparent conductive layer 211; and the second metal line 216 may extend along the edge of the second transparent conductive layer 212 and be electrically connected to the second transparent conductive layer 212. The first metal line 215 and the second metal line 216 may include, but are not limited to, silver paste lines, copper plating, aluminum plating, or molybdenum-aluminum-molybdenum and other multi-layer wiring structures. In an embodiment, the polymer dispersed liquid crystal layer 213 may cover part of the surface of the first transparent conductive layer 211 and the surface of the second transparent conductive layer 212 during the coating process, so as to form the above-mentioned dislocation structure. In another embodiment, the first transparent conductive layer 211 and the polymer dispersed liquid crystal layer 213 can be cut to expose part of the surface of the second transparent conductive layer 212 for setting the second metal line 216; and the second transparent conductive layer 212 and the polymer dispersed liquid crystal layer 213 can be cut to expose part of the surface of the first transparent conductive layer 211 for setting the first metal line 215. Specifically, the cutting can be, but is not limited to, laser cutting. In another embodiment, when laminating the dimming film 21 with the above dislocation structure and the second decorative layer 22, the surroundings of the dimming film 21 can be filled with adhesive to prevent the evaporation of the liquid crystal material and ensure the effect of the dimming film 21. It can be understood that the same design described above can be used for other dimming film 21 such as PNLC film, and details will not be repeated herein.

In the present disclosure, the color-changing film 100 may be provided with a plurality of dimming structures 20, and the plurality of dimming films 21 in the plurality of dimming structures 20 may all be PDLC films, or all may be PNLC films, or may be partially PDLC films and partially PNLC films, which is not limited herein.

In some embodiments of the present disclosure, the light transmittance of dimming film 21 is greater than or equal to 80%. That is to say, the dimming film 21 can have a high transmittance when the power is turned on and off, so that the appearance effect of the color-changing film 100 is improved. It can be understood that light transmittance is the light transmittance in the 380nm-780nm band. Specifically, the light transmittance of dimming film 21 can be, but not limited to, 80%, 81%, 82%, 83%, 84%, or 85%, etc. In some embodiments of the present disclosure, the absolute value of the haze difference between power-on and power-off of dimming film 21 is greater than or equal to 70%. That is to say, there is a significant haze difference of the dimming film 21 between the power is turned on and off, so that the dimming film 21 presents a transition between clear and opaque. Specifically, the absolute value of the haze difference of the dimming film 21 between power on and off is 70%, 72%, 73%, 75%, 76%, 78%, or 80%, etc. In an embodiment, the haze of the dimming film 21 is below 10% in the power-on state, and the haze of the dimming film 21 is above 80% in the power-off state; or the haze of the dimming film 21 is below 10% in the power-off state, and the haze of the dimming film 21 is above 80% in the power-on state. In another embodiment, the light transmittance of dimming film 21 is greater than or equal to 80%, and the absolute value of the haze difference of dimming film 21 between power-on and power-off is greater than or equal to 70%. That is to say, the light transmittance of the dimming film 21 is high when the power is on and off, and the transition between the clear and opaque of the dimming film 21 is realized by controlling the haze. In an embodiment, the haze of the PDLC film is below 10% in the power-on state, the haze is above 80% in the power-off state, and the light transmittance of the PDLC film is greater than or equal to 80%. In another embodiment, the haze of the PNLC film is below 10% in the power-off state, and the haze is above 80% in the power-on state, and the light transmittance of the PNLC film is greater than or equal to 80%.

In some embodiments of the present disclosure, there are pigment molecules dispersed in dimming film 21. By disposing the pigment molecules in the dimming film 21, the dimming film 21 can have both clear and opaque states, and also have colors in both clear and opaque states, further cooperate with the first decorative layer 10 and the second decorative layer 22 to form the appearance color of color-changing film 100.

Further, the pigment molecules are uniformly dispersed in the dimming film 21, so that the color of the dimming film 21 is uniform. Specifically, the pigment molecules can be, but are not limited to, red, yellow, green, purple, blue, orange, brown, etc., so that the dimming film 21 is colored and clear in a clear state, and colored and opaque in an opaque state. In an embodiment, pigment molecules are dispersed in polymer dispersed liquid crystal layer 213 and/or polymer network liquid crystal layer 214, thereby making the dimming film 21 colored.

In the present disclosure, the second decorative layer 22 is a light-transmitting layer, so that when the dimming film 21 is in a clear state, the dimming structure 20 can superimpose the appearance effect of the first decorative layer 10, so that the color-changing film 100 presents the superimposed visual effect. In some embodiments of the present disclosure, the light transmittance of second decorative layer 22 is greater than or equal to 80%. Specifically, the light transmittance of the second decorative layer 22 can be, but is not limited to, 80%, 82%, 85%, 88%, 89%, 90%, or 92%, etc.

In some embodiments of the present disclosure, the second decorative layer 22 includes at least one second color layer 221, at least one second optical film layer 222, at least one second texture layer 223, or a combination thereof. By disposing the second color layer 221, the second decorative layer 22 has a color appearance, realizing the obvious color change of the color-changing film 100 when the power is on and off. By disposing the second optical film layer 222, the second decorative layer 22 has the changing effect of light and shadow. By disposing the second texture layer 223, the second decorative layer 22 has a textured appearance.

In some embodiments of the present disclosure, there is a color difference between the second decorative layers 22 in the dimming structures 20, so that the color-changing film 100 can present at least three color changes, with high appearance variability and excellent visual effects. Further, at least one of the texture structure, color, refractive index, transmittance, and glossiness of the second decorative layers 22 in the dimming structures 20 are different, so that the appearance effects of the second decorative layers 22 are different, to make color-changing film 100 have different appearance effects by overlaying. In an embodiment, the texture structures of the second decorative layers 22 are different, including at least one of texture structure type, at least one of texture structure width, at least one of texture structure height, at least one of texture structure length, at least one of texture structure arrangement, at least one of texture structure cross-sectional shape, at least one of texture structure curvature, at least one of texture structure period, at least one of texture structure position, at least one of texture structure distribution, or a combination thereof.

In some embodiments of the present disclosure, the first decorative layer 10 includes at least one first color layer 11, at least one first optical film layer 12, at least one first texture layer 13, at least one non-conductive metal layer 14, or a combination thereof. By disposing the first color layer 11, the first decorative layer 10 has a color appearance, realizing the obvious color change of the color-changing film 100 between the power is on and off; by disposing the first optical film layer 12, the first decorative layer 10 has the change of light and shadow effect; by disposing the first texture layer 13, the first decorative layer 10 has a textured appearance; and by disposing the non-conductive metal layer 14, the first decorative layer 10 has a metallic color and luster.

In the present disclosure, the thickness of the first color layer 11 and the thickness the second color layer 221 are not limited. In an embodiment, the thickness of the first color layer 11 and the thickness of the second color layer 221 can be, but is/are not limited to, 3µm-20µm, For instance, the thickness of the first color layer 11 and the thickness of the second color layer 221 may be, e.g., 3µm, 4µm, 5µm, 8µm, 10µm, 13µm, 15µm, 17µm, 18µm, or 20µm. The thickness of the first color layer 11 and the thickness of the second color layer 221 can be the same or different. In some embodiments of the present disclosure, the first color layer 11 and the second color layer 221 can be formed by, but is/are not limited to, at least one of offset printing, at least one of silk screen printing, at least one of printing, at least one of heat transfer printing, or a combination thereof. In an embodiment, the first color layer 11 and the second color layer 221 can be formed of colored ink. The first color layer 11 and the second color layer 221 can have a single-layer structure or a multi-layer structure; the colors of inks forming different layers can be the same or different. Specifically, the ink color can be, but is not limited to, yellow, orange, red, blue, green, purple, white, black, etc. In an embodiment of the present disclosure, first color layer 11 can be a gradient color layer. In another embodiment of the present disclosure, the second color layer 221 can be a gradient color layer, so that the color-changing film 100 not only has a color-changing appearance, but also has a gradient color effect, and the visual effect is richer. In the present disclosure, the first color layer 11 can be a transmitting layer or a non-transmitting layer, which can be selected according to needs.

In some embodiments of the present disclosure, the material of the first optical film layer 12 and the second optical film layer 222 can be inorganic or organic. Optionally, the organic matter includes at least one of polyether, at least one of polyester, at least one of fluoropolymer, at least one of silicon-containing polymer, or a combination thereof. If the material of the first optical film layer 12 and/or second optical film layer 222 is organic, the first optical film layer 12 and/or second optical film layer 222 has good flexibility and good bendability, and can be cut to obtain the required size. Optionally, the inorganic matter includes at least one of inorganic oxide, at least one of inorganic fluoride, or a combination thereof. Further, the materials of the first optical film layer 12 and the second optical film layer 222 are respectively selected from at least one of TiO₂, at least one of Ti₃O₅, at least one of NbO₂, at least one of Nb₂O₃, at least one of Nb₂O₂, at least one of Nb₂O₅, at least one of Al₂O₃, at least one of SiO₂, at least one of ZrO₂, or a combination thereof. In an embodiment, the first optical film layer 12 and the second optical film layer 222 are respectively selected from at least two layers of TiO₂ layer, Ti₃O₅ layer, NbO₂ layer, Nb₂O₃ layer, Nb₂O₂ layer, Nb₂O₅ layer, Al₂O₃ layer, SiO₂ layer and ZrO₂ layer. In an embodiment, the first optical film layer 12 and the second optical film layer 222 include Nb₂O₅ layer, SiO₂ layer, Nb₂O₅ layer and SiO₂ layer which are sequentially cascaded. In the present disclosure, the thickness of the first optical film layer 12 and the thickness of the second optical film layer 222 are not particularly limited. In an embodiment, the thickness of the first optical film layer 12 and the thickness of the second optical film layer 222 can be, but not limited to, 50nm-650nm respectively, specifically can be, but not limited to, 60nm, 100nm, 150nm, 200nm, 260nm, 335nm, 450nm, 500nm or 600nm etc. The thickness of the first optical film layer 12 and the thickness of the second optical film layer 222 can be the same or different.

In the present disclosure, the thickness of the first texture layer 13 and the thickness of the second texture layer 223 are not particularly limited. In an embodiment, the thickness of the first texture layer 13 and the thickness of the second texture layer 223 can be, but not limited to, 8µm-15µm, specifically, can be, but not limited to, 8µm, 9µm, 10µm, 11µm, 12µm, 13µm, 14µm or 15µm, etc. In some embodiments of the present disclosure, the surface of the first texture layer 13 has a plurality of first texture structures, and the surface of the second texture layer 223 has a plurality of second texture structures. By disposing the first texture structure and the second texture structure, the first texture layer 13 and second texture layer 223 have rich texture effects. In an embodiment, the first texture structure and the second texture structure are different in at least one of type, at least one of width, at least one of height, at least one of length, at least one of arrangement, at least one of cross-sectional shape, at least one of curvature, at least one of period, at least one of position, at least one of distribution, or a combination thereof. So that the color-changing film 100 is not only different in color, but also different in texture.

In the present disclosure, non-conductive metal layer 14 makes the shell have a metallic luster and enhances the metallic texture. In some embodiments of the present disclosure, the non-conductive metal layer 14 is made of metal material, which may include but not limited to indium, tin or indium tin alloy. In some embodiments of the present disclosure, the thickness of the non-conductive metal layer 14 is 25nm-50nm. Further, the thickness of the non-conductive metal layer 14 is 30nm-45nm. Specifically, the thickness of the non-conductive metal layer 14 can be, but not limited to, 25nm, 30nm, 35nm, 40nm, 45nm, or 50nm.

In some embodiments of the present disclosure, the first decorative layer 10 and/or second decorative layer 22 also includes a logo layer. By disposing the logo layer, information such as text and trademarks can be presented, enriching the appearance of the color-changing film 100. In an embodiment, the first decorative layer 10 includes the logo layer. The logo information of the color-changing film 100 is presented through the logo layer, and the visual effect is richer.

In the present disclosure, by disposing the first color layer 11, first optical film layer 12 and/or non-conductive metal layer 14 to make the first decorative layer 10 have color, and by disposing the second color layer 221 and/or second optical film layer 222 causes second decorative layer 22 to be colored. In an embodiment of the present disclosure, color-changing film 100 shows a first color when power on, and shows a second color when power off. One of the first color and the second color is the color of dimming structure 20, and the other one of the first color and the second color is the superimposed color of the dimming structure 20 and the first decorative layer 10. Taking a dimming structure 20 as an example to illustrate, if the dimming structure 20 is a forward dimming film, the first color is the superimposed color of the dimming structure 20 and the first decorative layer 10, and the second color is the color of dimming structure 20; if the dimming structure 20 is a reverse dimming film, the first color is the color of dimming structure 20, and second color is the superimposed color of the dimming structure 20 and the first decorative layer 10. In an embodiment, if the haze of the dimming film is below 10%, and the light transmittance is above 80%, the color of the color-changing film 100 is the superimposed color of the dimming structure 20 and the first decorative layer 10; if the haze of the dimming film is above 80%, the color of the color-changing film 100 is the color of the dimming structure 20. In another embodiment of the present disclosure, the color-changing film 100 is the first color when power on, and is the second color when power off. The Lab value of the first color is (L1, a1, b1), and the Lab value of the second color is (L2, a2, b2), where L1 is 0~100, a1 is -128~127, b1 is - 128~127, L2 is 0~100, a2 is -128~127, b2 is -128~127. It can be understood that by controlling the internal layer structure of the color-changing film 100, the color-changing film 100 can have a wide range of color choices under the condition of power on and off, and can choose from any color; and the colors of each layer can be calculated and set according to the needed superimposed effect. In an embodiment, the first decorative layer 10 is a blue metal film, the second decorative layer 22 is a semi-transparent purple layer, and the dimming film 21 is milky white under the power off condition, so that the color-changing film 100 presents pink which is the superimposed color of the second decorative layer 22 and the dimming film 21; the dimming film 21 is colorless and clear under power on condition, which makes color-changing film 100 present the deep purple, which is the superimposed color of the first decorative layer 10 and the second decorative layer 22. In another embodiment, the first decorative layer 10 is a blue metal film, the second decorative layer 22 is a texture layer, and the dimming film 21 is opaque yellow in the power off condition, making the color-changing film 100 present a yellow texture effect; and the dimming film 21 is colorless and clear under the power on condition, making the color-changing film 100 present a green texture effect. Specifically, the color-changing film 100 can be formed to realize color changes between blue and green, black and gray, red and purple, etc., without limitation on color change. Compared with the color-changing that is limited by the performance of electrochromic materials, the color-changing effect of the color-changing film 100 provided herein can be selected in a wide range, with higher application value and stronger practicability. In an embodiment, L2 > L1. The color brightness of the second decorative layer 22 is higher than that of the first decorative layer 10, and it is easier to achieve the color changing effect between different color schemes. In another embodiment, the absolute value of the difference between a1 and a2 is greater than 10. Further, the absolute value of the difference between a1 and a2 is greater than 20. Further, the absolute value of the difference between a1 and a2 is greater than 30. In another embodiment, the absolute value of the difference between b1 and b2 is greater than 10. Further, the absolute value of the difference between b1 and b2 is greater than 20. Further, the absolute value of the difference between b1 and b2 is greater than 30. In an embodiment, the first decorative layer 10 includes a 1µm logo layer, a 0.5µm cyan layer, a 0.5µm magenta layer, a 0.5µm yellow layer and a 0.7µm black layer, which are cascaded; and second decorative layer 22 includes a 0.7µm texture layer, a 1µm logo layer, a 0.5µm cyan layer, a 0.5µm magenta layer, a 0.5µm yellow layer, a 0.7µm black layer and a 0.5µm optical film layer, which are cascaded; so as to achieve rich color changes.

In some embodiments of the present disclosure, there is a color difference between the first decorative layer 10 and the second decorative layer 22, so that the color difference value of the color-changing film 100 is relatively large, achieving obvious color changes, and even realizing transitions between different color schemes. In an embodiment, the color difference value of first decorative layer 10 and second decorative layer 22 is greater than 4. Further, the color difference value of first decorative layer 10 and second decorative layer 22 is greater than 6. Further, the color difference value of first decorative layer 10 and second decorative layer 22 is greater than 8. By designing the color difference value of the first decorative layer 10 and the second decorative layer 22, the color change of the color-changing film 100 between power on and power off is obvious, and even two irrelevant colors can be changed.

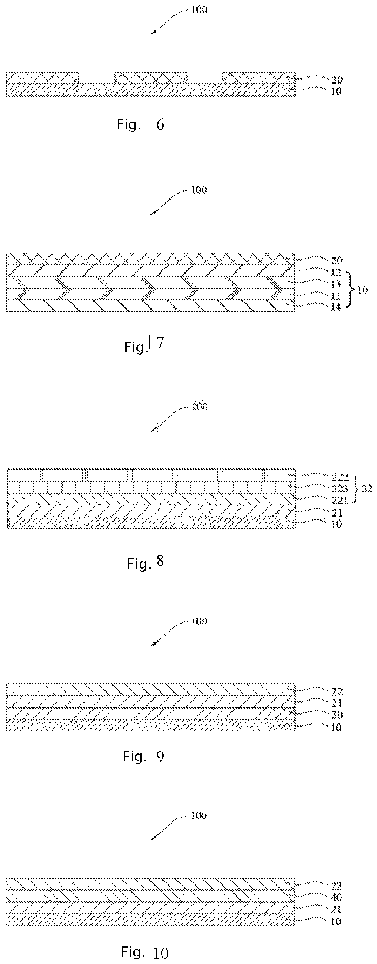

Referring again to FIG. 1, the color-changing film 100 includes the dimming structure 20. The color-changing film 100 includes the first decorative layer 10, the dimming film 21 and the second decorative layer 22 that are sequentially cascaded. In another embodiment of the present disclosure, the color-changing film 100 includes multiple dimming structures 20. By disposing multiple dimming structures 20, the color-changing film 100 can realize more color changes, and the product competitiveness is greatly improved. FIG. 5 is a schematic structural diagram of a color-changing film, according to another embodiment of the present disclosure. FIG.5 differs from FIG.1 in that the color-changing film 100 has multiple dimming structures 20, and multiple dimming structures 20 are cascaded. By controlling the power on and power off of the dimming structure 20, at least two colors can be changed. FIG. 6 is a schematic structural diagram of a color-changing film, according to another embodiment of the present disclosure. FIG. 6 differs from FIG. 1 in that the color-changing film 100 has multiple dimming structures 20, and multiple dimming structures 20 are disposed in the same layer. By controlling the power on and power off of the regulating structure, the color change of different regions of the color-changing film 100 can be realized, so that the color-changing film 100 can not only realize color change, but also have a color-contrasting appearance, with rich visual effects. In some embodiments of the present disclosure, the orthographic projection of the second decorative layer 22 on the first decorative layer 10 completely or partially covers the first decorative layer 10. If the second decorative layer 22 completely overlaps with the first decorative layer 10, the dynamic change of the overall color of the color-changing film 100 can be realized; and if the second decorative layer 22 partially overlaps with the first decorative layer 10, the dynamic change of part of the color of the color-changing film 100 and the fixation of part of the color can be realized, so that the spliced color appearance can be realized with rich effects.

FIG. 7 is a schematic structural diagram of a color-changing film, according to another embodiment of the present disclosure. FIG. 7 differs from FIG. 1 in that the first decorative layer 10 includes the first optical film layer 12, the first texture layer 13, the first color layer 11 and the non-conductive metal layer 14, which are cascaded. The first optical film layer 12 is disposed between the first texture layer 13 and the dimming structure 20, so that the first decorative layer 10 has the appearance effect of texture, color, metallic texture and gloss changes. Specifically, the first decorative layer 10 includes at least one of first color layer 11, at least one of the first optical film layer 12, at least one of the first texture layer 13, at least one of the non-conductive metal layer 14, or a combination thereof, which can be selected according to needs.

FIG. 8 is a schematic structural diagram of a color-changing film, according to another embodiment of the present disclosure. FIG.8 differs from FIG.1 in that the second decorative layer 22 includes the second optical film layer 222, the second texture layer 223 and the second color layer 221, which are cascaded. The second color layer 221 is disposed between the second texture layer 223 and the first decorative layer 10, so that the second decorative layer 22 has the appearance effect of texture, color and gloss changes. Specifically, the second decorative layer 22 includes at least one of the second color layer 221, at least one of the second optical film layer 222, at least one of the second texture layer 223, or a combination thereof, which can be selected according to needs.

FIG. 9 is a schematic structural diagram of a color-changing film, according to another embodiment of the present disclosure. FIG. 9 differs from FIG. 1 in that the color-changing film 100 includes the first connection layer 30, and the first connection layer 30 is disposed between the first decorative layer 10 and the dimming structure 20, to connect the first decorative layer 10 and the dimming structure 20. FIG. 10 is a schematic structural diagram of a color-changing film, according to another embodiment of the present disclosure. FIG. 10 differs from FIG. 1 in that the color-changing film 100 includes the second connection layer 40, and the second connection layer 40 is disposed between the dimming film 21 and the second decorative layer 22, to connect the dimming film 21 and the second decorative layer 22. By disposing the first connection layer 30 and the second connection layer 40, the internal structure of the color-changing film 100 is combined more tightly. Specifically, the first connection layer 30 and the second connection layer 40 may be, but is/are not limited to, optical adhesive layers, so as to ensure the connection between the layer structures without affecting the light transmission.

In some embodiments of the present disclosure, the thickness of the color-changing film 100 is 100µm-700µm. By disposing the color-changing film 100 with the above-mentioned thickness, the weight and volume of the color-changing film 100 may not be unduly increased, which can facilitate the application of the color-changing film 100 in electronic devices. Further, the thickness of the color-changing film 100 is 120 µm-650µm. Furthermore, the thickness of the color-changing film 100 is 150 µm-580µm. Specifically, the thickness of the color-changing film 100 may be, but not limited to, 100µm, 150µm, 200µm, 260µm, 300µm, 320µm, 400µm, 450µm, 500µm, 590µm, 600µm, or 670µm.

In the present disclosure, by combining the dimming structure 20 and the first decorative layer 10, the color-changing effect of the color-changing film 100 is realized, the appearance of the color-changing film 100 is improved, and the color-changing film 100 can realize a dynamic color-changing visual effect, which is beneficial for its application.

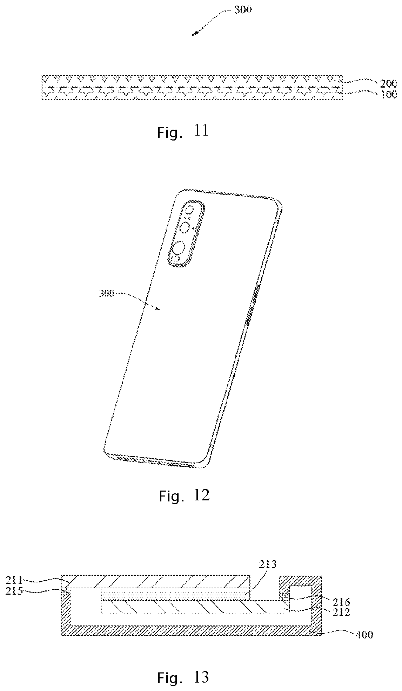

A housing assembly 300 is also disclosed in the present disclosure. The housing assembly 300 includes the color-changing film 100 in any one of the above-mentioned embodiments. FIG. 11 is a schematic structural diagram of a housing assembly, according to an embodiment of the present disclosure. The housing assembly 300 includes a housing body 200 and the color-changing film 100 disposed on the surface of the housing body 200. By disposing the color-changing film 100, the appearance of the housing assembly 300 can be greatly improved.

In the present disclosure, the thickness of the housing body 200 is not particularly limited. Specifically, the thickness of the housing body 200 can be, but not limited to, 0.1mm-1mm, such as 0.2mm, 0.3mm, 0.4mm, 0.5mm, 0.6mm, 0.7mm, 0.8mm or 0.9mm, etc. In the present disclosure, the specific shape and size of the housing body 200 are not limited, and can be selected and designed according to actual needs. For example, the shape of the housing body 200 can be 2D shape, 2.5D shape, 3D shape, etc., and the housing body 200 can be, but not limited to, the back shell or frame of an electronic device. In the present disclosure, the material of the housing body 200 can be, but not limited to, any known material that can be used for the electronic device housing assembly 300, such as plastic, glass, etc. It can be understood that the housing body 200 has an inner surface and an outer surface arranged oppositely. In an embodiment of the present disclosure, the color-changing film 100 is disposed on the outer surface of the housing body 200, and the first decorative layer 10 is disposed between the housing body 200 and the second decorative layer 22. In another embodiment of the present disclosure, the housing body 200 is a transparent shell, the color-changing film 100 is disposed on the inner surface of the transparent shell, the second decorative layer 22 is disposed between the transparent shell and the first decorative layer 10. Specifically, the housing body 200 can be a glass housing or a plastic housing.

An electronic device is also disclosed in the present disclosure. The electronic device includes the housing assembly 300 in any one of the above-mentioned embodiments. It can be understood that the electronic device can be, but not limited to, mobile phones, tablet computers, laptops, watches, MP3, MP4, GPS navigators, digital cameras, etc. Takes a mobile phone as an example for illustration in the following. FIG. 12 is a schematic structural diagram of an electronic device, according to an embodiment of the present disclosure. The electronic device includes the housing assembly 300 and the control circuit, and the control circuit is electrically connected with the dimming film 21.

In some embodiments of the present disclosure, the electronic device includes a flexible circuit board 400. The dimming film 21 and the control circuit are connected through the flexible circuit board 400 to realize switching between the clear state and the opaque state of the dimming film 21, thereby realizing the color-changing effect of the color-changing film 100 and the housing assembly 300. FIG. 13 is a schematic diagram of the connection between the dimming film and the flexible circuit board, according to an embodiment of the present disclosure. Taking PDLC film as an example, PDLC film is provided with the first transparent conductive layer 211, the polymer dispersed liquid crystal layer 213, the second transparent conductive layer 212, the first metal line 215 and the second metal line 216. The flexible circuit board 400 is connected to the first metal line 215 and the second metal line 216 of the PDLC film, so as to control the power on and power off of the PDLC film, thereby realizing the color change of the color-changing film 100.

In the present disclosure, the electronic device includes a housing assembly 300 and a control circuit, and the control circuit is electrically connected to the dimming film 21 in the color-changing film 100. The control circuit is configured to receive control commands, and the control commands are used to control the color-changing film 100 to change color. In an embodiment of the present application, the electronic device further includes a processor connected to the control circuit, and a signal input apparatus connected to the processor, the signal input apparatus inputs signal commands to the processor, and the processor inputs control commands to the control circuit according to the signal commands. The control circuit is used to control the dimming film to change the state according to the control commands, thereby changing the color of the color-changing film 100. Specifically, the color change of the color-changing film 100 can be controlled by controlling the working state of the dimming film 21, such as changing its voltage or current signal state.

In some embodiments of the present disclosure, the signal input apparatus can include any one of a touch screen, a physical button, a sensor, or a communication module. In an embodiment, the signal input apparatus includes the touch screen, and the signal commands input by the signal input apparatus can be commands generated when the touch screen receives a touch operation when displaying a certain interface. For example, the touch operation may include any one of operations such as sliding, clicking, and long-pressing in a designated area of the interface. In another embodiment, the signal input apparatus includes the physical button, and the signal commands input by the signal input apparatus can be the trigger instructions of the physical button. For example, the physical button can be a button independent of other function buttons, or a button multiplexed with other function buttons of the electronic device (such as power button, volume button, etc.); the processor receives different signal commands according to different key trigger modes (such as pressing the power key and the volume key at the same time), and then the control circuit can realize the control of the dimming film 21. In another embodiment, the signal input apparatus includes a sensor, and the signal commands may be instructions received by the sensor. Specifically, the sensor may be a proximity sensor, a temperature sensor, an ambient light sensor, etc., the sensor can collect the environmental information and/or internal information of the electronic device, and generate signal commands based on the environmental information and/or internal information. For example, the sensor obtains the internal temperature of the electronic device, generates signal commands and sends them to the processor; if the processor judges that the internal temperature is greater than the preset temperature value, it generates control commands and sends them to the control circuit, and the control circuit receives the control commands to change the color of the color-changing film to remind the user. In another embodiment, the signal input apparatus includes a communication module. The signal commands input by the signal input apparatus can be text message, multimedia message, incoming calls, emails, etc., and the text message, multimedia message, incoming call, and email can be data information in application software in electronic devices. In an embodiment, the communication module receives text message, multimedia message, incoming call or email, etc., and sends signal commands to the processor; and the processor generates control commands according to the signal commands and sends them to the control circuit, and the control circuit changes the color of the color-changing film according to the control commands to remind the user. Furthermore, after the user reads the text message, multimedia message, incoming call or email, etc., the communication module sends signal commands to the processor, and the processor generates control commands according to the signal commands and sends them to the control circuit, and the control circuit makes the color-changing film change color again according to the control commands. In another embodiment, the communication module receives text message, multimedia message, incoming call or email, etc., and sends signal commands to the processor, and the processor generates control commands according to the signal commands and sends them to the control circuit, and the control circuit dynamically changes the color of the color-changing film according to the control commands, so as to remind the user. Furthermore, the color-changing frequency of the color-changing film 100 can be controlled according to the type of information received by the communication module, for example, the color-changing film 100 changes color quickly when there is an incoming call, and the color-changing film 100 changes color slowly when there is a text message. In another embodiment, the communication module can receive text message, multimedia message, incoming call or email, etc., and send signal commands to the processor; if the processor judges that the text message, multimedia message, incoming call or email comes from a preset contact, the processor generates control commands and sends them to the control circuit, and the control circuit changes the color of the color-changing film according to the control commands, so as to remind the user that the message of the preset contact has been received. For example, the color-changing film 100 quickly performs dynamic color changes when there is a message from a preset contact.

The electronic device provided by this disclosure has strong variability in appearance, rich visual effects, and better interactivity, which greatly improves the competitiveness of the product.

The embodiments of the present disclosure have been introduced in detail above, and the principles and embodiments of the present disclosure have been described and explained. The above descriptions are only used to help understand the methods and core ideas of the present disclosure; meanwhile, for those skilled in the art, based on the idea of this disclosure, there will be changes in the specific implementation and application scope. In summary, the content of this specification should not be understood as limiting the application.

## Claims

1. A color-changing film, comprising:
a first decorative layer; and
at least one dimming structure disposed on a surface of the first decorative layer,
wherein the first decorative layer is colored,
wherein each of the at least one dimming structure comprises a dimming film and a second decorative layer,
wherein the dimming film is disposed between the second decorative layer and the first decorative layer; and
wherein the second decorative layer is a light-transmitting layer.

2. The color-changing film of claim 1, wherein there is a color difference between the first decorative layer and the second decorative layer.

3. The color-changing film of claim 1, wherein
the color-changing film is provided with a plurality of dimming structures, and
the plurality of dimming structures are cascaded or disposed in a same layer.

4. The color-changing film of claim 3, wherein there is a color difference between the second decorative layers in the plurality of dimming structures.

5. The color-changing film of claim 1, wherein:
the color-changing film shows a first color when power on,
the color-changing film shows a second color when power off,
one of the first color and the second color is the color of the dimming structure, and
the other one of the first color and the second color is a superimposed color of the dimming structure and the first decorative layer.

6. The color-changing film of claim 5, wherein:
a Lab value of the first color is (L1, a1, b1),
the Lab value of the second color is (L2, a2, b2); L2>L1, and
the absolute value of a difference between a1 and a2 is greater than 10, or the absolute value of the difference between b1 and b2 is greater than 10.

7. The color-changing film of claim 1, wherein:
the dimming film is a polymer dispersed liquid crystal film, and
the polymer dispersed liquid crystal film comprises a first transparent conductive layer, a polymer dispersed liquid crystal layer and a second transparent conductive layer, which are cascaded.

8. The color-changing film of claim 1, wherein:
the dimming film is a polymer network liquid crystal film, and
the polymer network liquid crystal film comprises a first transparent conductive layer, a polymer network liquid crystal layer, and a second transparent conductive layer which are cascaded.

9. The color-changing film of claim 7 or 8, wherein
an orthographic projection of the polymer dispersed liquid crystal layer or the polymer network liquid crystal layer on the first transparent conductive layer falls on a surface of the first transparent conductive layer and covers part of the first transparent conductive layer,
an orthographic projection of the polymer dispersed liquid crystal layer or the polymer network liquid crystal layer on the second transparent conductive layer falls on a surface of the second transparent conductive layer and covers part of the second transparent conductive layer,
the dimming film comprises a first metal line and/or a second metal line,
the first metal line is disposed on the first transparent conductive layer, and
the second metal line is disposed on the second transparent conductive layer.

10. The color-changing film of claim 1, wherein pigment molecules are dispersed in the dimming film.

11. The color-changing film of claim 1, wherein the dimming film is a forward dimming film or a reverse dimming film.

12. The color-changing film of claim 1, wherein:
a light transmittance of the dimming film is greater than or equal to 80%, and
an absolute value of a haze difference of the dimming film between power-on and power-off is greater than or equal to 70%.

13. The color-changing film of claim 1, wherein:
the first decorative layer comprises at least one of a first color layer, at least one of a first optical film layer, at least one of a first texture layer, at least one of a non-conductive metal layer, or a combination thereof, and
the second decorative layer comprises at least one of a second color layer, at least one of a second optical film layer, at least one of a second texture layer, or a combination thereof.

14. The color-changing film of claim 1, wherein an orthographic projection of the second decorative layer on the first decorative layer completely or partially covers the first decorative layer.

15. The color-changing film of claim 1, wherein:
the color-changing film comprises a first connection layer,
the first connection layer is disposed between the first decorative layer and the dimming structure to connect the first decorative layer and the dimming structure,
the color-changing film comprises a second connection layer, and
the second connection layer is disposed between the dimming film and the second decorative layer to connect the dimming film and the second decorative layer.

16. A housing assembly, comprising:
a housing body; and
a color-changing film disposed on a surface of the housing body,
wherein the color-changing film is the color-changing film according to any one of claims 1 to 15.

17. The housing assembly of claim 16, wherein:
the color-changing film is disposed on an outer surface of the housing body, and the first decorative layer is disposed between the housing body and the second decorative layer, or
the housing body is a transparent shell, the color-changing film is disposed on an inner surface of the transparent shell, and the second decorative layer is disposed between the transparent shell and the first decorative layer.

18. An electronic device, comprising:
a housing assembly and a control circuit; wherein the housing assembly comprises a housing body and a color-changing film disposed on the housing body,
wherein the color-changing film is the color-changing film according to any one of claims 1 to 15.

19. The electronic device of claim 18, wherein:
the electronic device comprises a processor connected to the control circuit and a signal input apparatus connected to the processor,
the signal input apparatus is configured to input a signal command to the processor,
the processor is configured to input a control command to the control circuit according to the signal command, and
the control circuit is configured to control the dimming film to change state according to the control command, thereby changing the color of the color-changing film.

20. The electronic device of claim 19, wherein the signal input apparatus comprises at least one of a touch screen, at least one of a physical button, at least one of a sensor, at least one of a communication module, or a combination thereof.
